(19) Europäisches Patentamt
European Patent Office
Office européen des brevets

(11) EP 2 689 951 A1

(12) **EUROPEAN PATENT APPLICATION**

(43) Date of publication:
**29.01.2014 Bulletin 2014/05**

(51) Int Cl.:
***B60K 15/03*** (2006.01)

(21) Application number: **13177591.8**

(22) Date of filing: **23.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.07.2012 JP 2012164053**

(71) Applicant: **Yachiyo Industry Co., Ltd.**
**Sayama-shi,**
**Saitama 350-1335 (JP)**

(72) Inventors:
• **Iwase, Wataru**
**Tochigi (JP)**
• **Nakamura, Kazuhiro**
**Tochigi (JP)**

(74) Representative: **Kiwit, Benedikt**
**Mitscherlich & Partner**
**Sonnenstraße 33**
**80331 München (DE)**

(54) **Hollow container and apparatus for manufacturing same**

(57)     The present invention provides a hollow container that enables the suppression of permeation of the content of the hollow container to the outside. A hollow container (1A) includes a hollow container body (2A) and a sub-component (3A). The hollow container body (2A) has an opening (2a) in its wall. The sub-component (3A) is inserted in the opening (2a) and is in contact with an outer surface of the wall at a contact portion (2c) of the container body (2A) to seal the container body (2A). The container body (2A) is made of multiple layers including an intermediate barrier layer (2x). The wall of the container body (2A) is thinner at a circumferential edge portion around the opening (2a) as a thinner portion (2b) than at the contact portion (2c) where the sub-component (3A) is in contact with the outer surface of the wall.

FIG.1B

## Description

BACKGROUND OF THE INVENTION

1. Field of the Invention

The present invention relates to a hollow container and an apparatus for manufacturing the same.

2. Description of the Invention

In manufacturing a hollow container to be used as a vehicle fuel tank or the like, there is a case where a container body is produced by blow molding, and then a sub-component to penetrate a wall of the container body is joined to the container body by welding. In such a case, an opening is formed in the wall of the blow-molded container body, and then the sub-component is joined to the blow-molded container body by welding in such a manner that the sub-component plugs and seals the opening (see Japanese Unexamined Patent Application Publication Nos: 2009-534215, 2008-507651, and 2007-092678).

Conventionally, container bodies of hollow containers have been produced by molding a parison including a resin layer. There has been a demand for suppressing the permeation of vaporized fuel through the resin layer from a section of the resin layer created by the formation of the opening to the outside.

The present invention has been made under the above circumstances, and it is an object of the present invention to provide a hollow container that enables the suppression of permeation of the content of the hollow container to the outside and also provide an apparatus for manufacturing the same.

In one aspect, the present invention provides a hollow container comprising:

a container body that is hollow and that has an opening formed in a wall of the container body; and a sub-component that is inserted in the opening and that is in contact with an outer surface of the wall at a contact portion of the container body to seal the container body, wherein the container body has a structure of multiple layers including an intermediate barrier layer, and the wall of the container body is thinner at a circumferential edge portion around the opening as a thinner portion than at the contact portion where the sub-component is in contact with the outer surface of the wall.

This arrangement, in which the circumferential edge portion around the opening is the thinner portion, makes it possible to suppress permeation of the content of the hollow container, for example, vaporized fuel, through the outer layer next to the barrier layer.

The thinner portion may be formed by compression.

This arrangement makes it easy to form the thinner portion.

In another aspect, the present invention provides an apparatus for manufacturing a hollow container:

a container body that is hollow and that has an opening formed in a wall of the container body; and a sub-component that is inserted in the opening and that is in contact with an outer surface of the wall at a contact portion of the container body to seal the container body, the apparatus manufacturing the container body by blow molding, wherein the apparatus comprises a compressor adapted to compress a portion of a parison that encompasses a region where the opening is to be made in order to form a thinner portion, the thinner portion being thinner than the contact portion where the sub-component is in contact with the outer surface of the wall, the parison having a structure of multiple layers including an intermediate barrier layer.

This arrangement makes it possible to manufacture a hollow container that enables the suppression of permeation of the content of the hollow container to the outside.

Moreover, the thinner portion may be cut to form the opening, which facilitates the manufacture of the hollow container, resulting in an improved productivity thereof.

Further, it is ensured that the contact portion has a sufficient thickness. This configuration suppresses the contact portion from being deformed by the welding and eliminates the need to use an apparatus or the like for backing-up the contact portion from inside the hollow container to ensure the reliability in assembling the sub-component into the container body and sealing the container body with the sub-component.

The compressor may be a presser to press the parison against a mold.

The compressor may blow a gas onto the parison in order to form the thinner portion.

According to the present invention, it is possible to provide a hollow container that enables the suppression of permeation of the content of the hollow container to the outside and also provide an apparatus for manufacturing the same.

BRIEF DESCRIPTION OF THE DRAWINGS

FIG. 1A is a cross sectional view of a hollow container according to a first embodiment of the present invention; FIG. 1B is an enlarged view of a section X1 of FIG. 1A; and FIG. 1C is an enlarged view of a section X2 of FIG. 1B.
FIG. 2A is a cross sectional view showing an apparatus for manufacturing the hollow container according to the first embodiment of the present invention; and FIG. 2B is an enlarged view of a section X3 of FIG. 2A.

FIGS. 3A-3D are schematic views showing a method of manufacturing the hollow container by using the apparatus according to the first embodiment of the present invention.

FIG. 4 is a cross sectional view of an apparatus for manufacturing a hollow container according to a second embodiment of the present invention.

FIG. 5 is a cross sectional view of an essential part of a hollow container according to a third embodiment of the present invention.

DETAILED DESCRIPTION OF THE PREFERRED EMBODIMENTS

Hereinafter, with reference to the accompanying drawings, description will be made of embodiments of the present invention wherein container bodies of hollow containers are produced by blow molding. Like components are denoted by like reference numerals, and detailed description thereof will be omitted.

<First Embodiment>

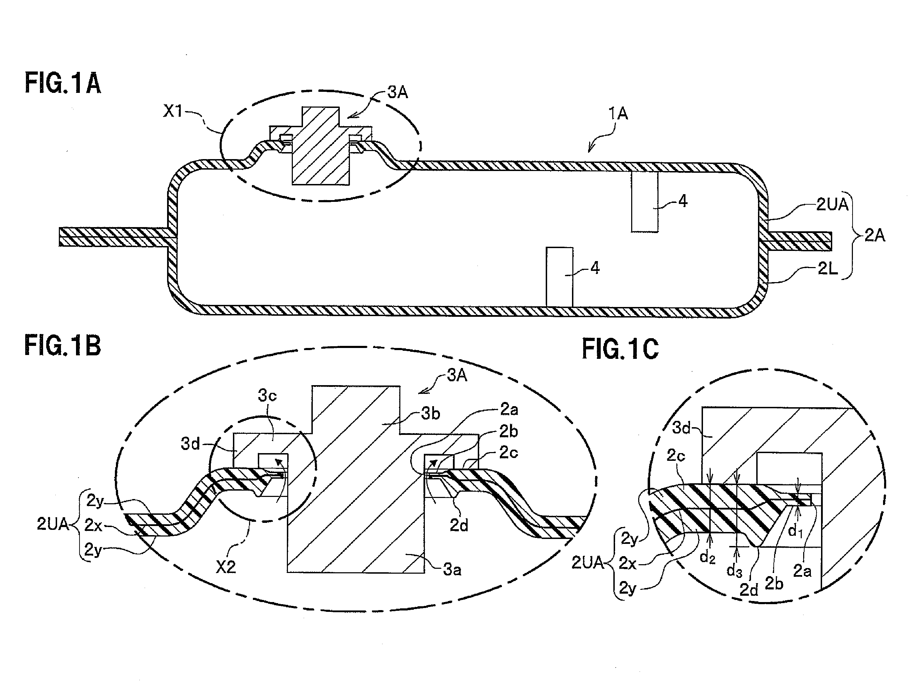

Now, description will be made of a hollow container, and an apparatus for and a method of manufacturing the hollow container, according to a first embodiment of the present invention, with reference to FIGS. 1A-3D.

<Hollow Container>

As shown in FIGS. 1A-1C, a hollow container 1A according to a first embodiment of the present invention includes a container body 2A, a sub-component 3A secured to the container body 2A, and built-in components 4, 4 fastened inside the container body 2A.

<Container Body>

The container body 2A is a hollow resin component produced by blow molding. The container body 2A is formed of a container-body upper part 2UA and a container-body lower part 2L that are joined together.
The container-body upper part 2UA and the container-body lower part 2L each have a structure of multiple layers including an intermediate barrier layer 2x. According to the present embodiment, these parts each have a structure of three layers consisting of an intermediate barrier layer 2x and resin layers (for example, high-density polyethylene layers) 2y, 2y each provided on one side of the barrier layer 2x. The structure of multiple layers is not limited to such a structure of three layers but may be a structure of four or more layers including an adhesive layer or the like.

The container-body upper part 2UA has an opening 2a which is a circular through hole formed in a wall thereof. A circumferential edge portion around the opening 2a is an annular shaped thinner portion 2b. The thinner portion 2b is formed by compression so as to be thinner than the remainder of the container-body upper part 2UA. An outer circumferential portion around the thinner portion 2b is a contact portion 2c where the sub-component 3A is in contact with an outer surface of the wall and where an annular projection 2d extends from an inner surface thereof. Thickness d1 of the thinner portion 2b, thickness d2 of the contact portion 2c, and thickness d3 of a section, of the contact portion 2c, at which the projection 2d extends satisfy the relationship:

$$d1 < d2 < d3$$

At the thinner portion 2b, a reduction is made in a cross sectional area of the outer resin layer 2y, which is a cross sectional area from which the content of the hollow container 1A permeates through the outer resin layer 2y to the outside. As a result, the leakage of the content of the hollow container 1A is favorably suppressed.

<Sub-component>

The sub-component 3A is a component penetrating through and sealing the opening 2a. The sub-component 3A includes an inner larger-diametric portion 3a, an outer smaller diametric portion 3b, a flange portion 3c, and an annular wall portion 3d. The flange portion 3c extends from between the larger diametric portion 3a and the smaller diametric portion 3b. The annular wall portion 3d extends from the outer circumferential edge of the flange portion 3c toward the inside of the hollow container 1A. The larger diametric portion 3a has an outer diameter smaller than the inner diameter of the opening 2a. The flange portion 3c has an outer diameter larger than the inner diameter of the opening 2a. This configuration allows the larger diametric portion 3a to be inserted into the opening 2a by being brought from outside the container body 2A. When the larger diametric portion 3a is inserted in the opening 2a, a top end surface of the annular wall portion 3d is in contact with the outer surface at the contact portion 2c. The sub-component 3A is adapted to seal the opening 2a with the larger diametric portion 3a inserted in the container body 2 while the smaller diametric portion 3b, the flange portion 3c and the annular wall portion 3d are exposed to the outside of the container body 2A. In this state, the top end surface of the annular wall portion 3d is joined by welding to the outer surface of the contact portion 2c to allow the sub-component to seal the opening 2a.

<Built-in Components>

The built-in components 4, 4 are components fastened inside the container body 2A. One built-in component 4 is embedded in the inner surface of the container-body upper part 2UA to a predetermined depth whereas the other built-in component 4 is embedded in the inner surface of the container-body lower part 2L to a predetermined depth.

<Apparatus for Manufacturing Hollow Container>

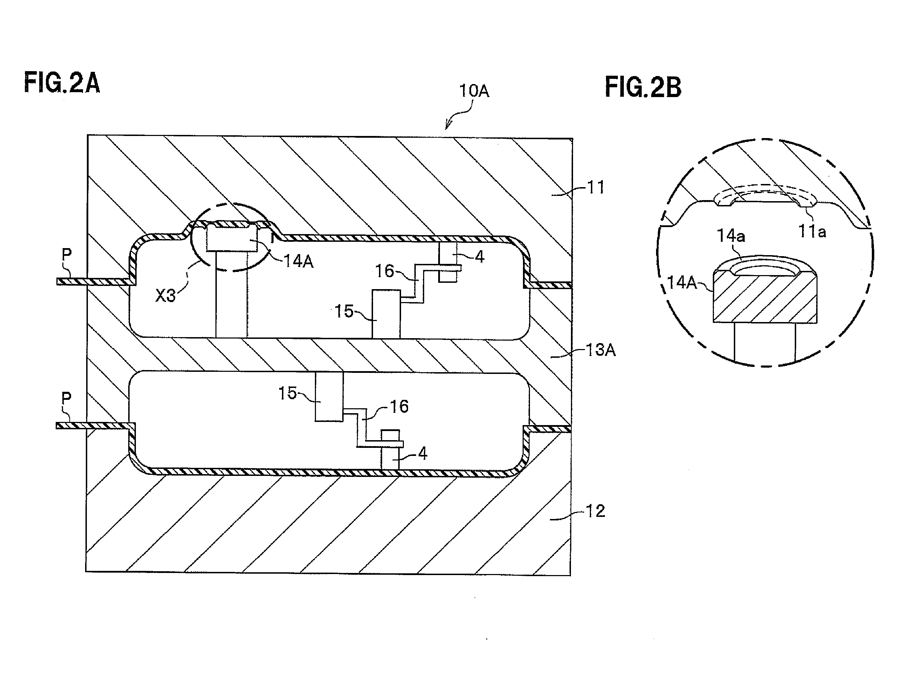

Now, description will be made of a hollow-container manufacturing apparatus for producing the container body 2A of the hollow container 1A with reference to FIGS. 2A and 2B.

As shown in FIGS. 2A and 2B, a hollow-container manufacturing apparatus 10A according to the first embodiment is a molding apparatus for blow molding the container body 2A of the hollow container 1A. The manufacturing apparatus 10A includes a pair of mold members 11,12 and a center frame 13A.

The parisons P, P are in the form of rectangular sheets. In a case where the hollow container 1A, which is a blow-molded article, is an on-board fuel tank, the parisons P, P each have a structure of multiple layers including the inner thermoplastic resin layer 2y and the outer thermoplastic resin layer 2y which respectively form the inner and outer surfaces of the tank and the barrier layer 2x which is sandwiched between the inner and outer thermoplastic resin layers 2y, 2y. The barrier layer 2x is made of, for example, material with a high impermeability to the fuel. The inner and outer thermoplastic resin layers 2y, 2y contain high-density polyethylene (HDPE) excellent in heat fusion and molding properties.

When the mold members 11,12 are closed against the center frame 13A sandwiched therebetween, the peripheral portions of the parisons P, P are sandwiched between each of the mating surfaces of the center frame 13A and its corresponding one of the mating surfaces of the mold members 11,12. The sandwiched peripheral portions serve as pinch-off portions. The manufacturing apparatus has a function to fasten a built-in component 4 to an internal surface of a parison P. The center frame 13A is provided with a cylinder 15 which serves as an actuator to fasten a built-in component 4 to the parison P. According to the present embodiment, the center frame 13A is provided with cylinders 15, 15 to fasten the built-in components 4, 4 to the parisons P, P provided on both sides of the center frame 13A, as shown in FIG. 2A. Brackets fixed to the cylinders 15, 15 have top end portions provided with clamping mechanisms 16,16 to hold the built-in components 4, 4.

As shown in FIGS. 2A and 2B, a jig 14A extends upright from the center frame 13A. The jig 14A is a die to press a portion of the parison P against a portion of the mold member 11 located opposite to the jig 14A. The jig 14A has a top end surface with an annular, circular, or C-shaped (here, annular) projection 14a formed thereon. The projection 14a serves as a portion to press the parison P against the mold member 11 for compressing the parison P.

The mold member 11 has, on the other hand, a molding surface with an annular, circular, or C-shaped (here, annular) projection 11a formed at a location opposed to the projection 14a of the jig 14A. When the mold members 11,12 are closed against the center frame 13A sandwiched therebetween, a portion of the parison P is pressed between the projections 11a, 14a and thereby compressed to form the circular or annular shaped (here, annular shaped) thinner portion 2b.

<Method of Manufacturing Hollow Container>

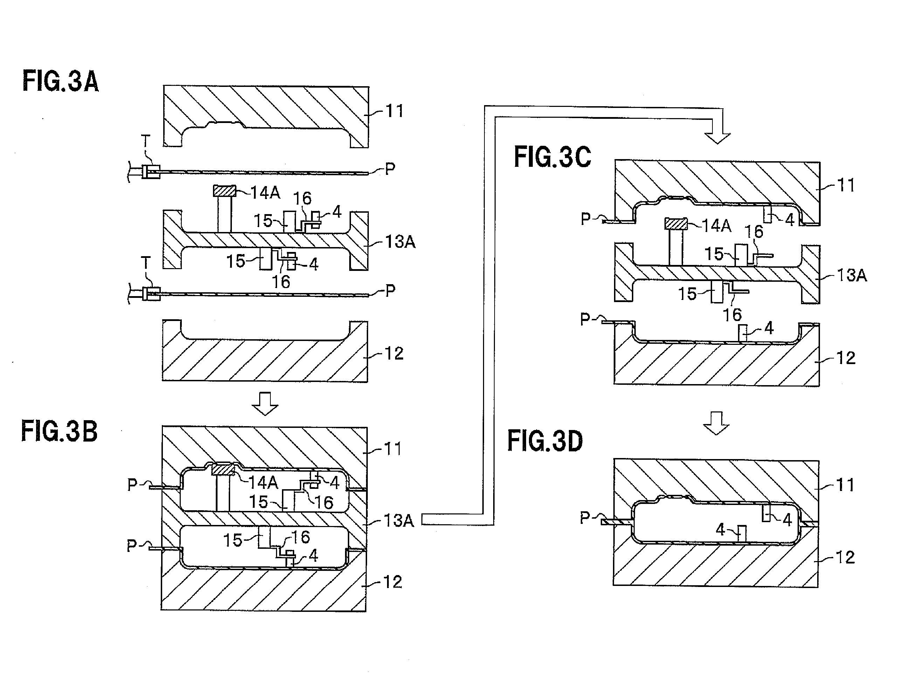

Now, description will be made of the method of manufacturing the hollow container 1A using the hollow-container manufacturing apparatus 10A, with reference to FIGS. 3A-3D.

As shown in FIG. 3A, the parisons P, P in the form of a pair of sheets are transferred into spaces, respectively, that are formed between the center frame 13A and the mold members 11,12, by means of the transfer devices T,T. Next, as shown in FIG. 3B, the mold members 11,12 are closed with the parisons P, P sandwiched between the mold members 11,12 and the center frame 13A to form sealed spaces between each of the mating surfaces of the mold members 11,12 and its corresponding one of the outer surfaces of the parisons P, P. Then, a vacuum is drawn through vacuum holes (not shown) formed in the molds 11, 12, and the air is blown through blow-pins (not shown) from the inner surface sides of the parions P, P, in order to transfer the parisons P, P onto the molding surfaces of the closed mold members 11,12.

By this being done, one parison P is pressed between the projections 11a, 14a to form the annular thinner portion 2b in the one parison P. The thinner portion 2b is a portion compressed compared to the remainder of the one parison P. The thinner portion 2b encompasses a region where the opening 2a is to be made. Namely, The thinner portion 2b extends across a length from an inner circumferential area around the region where the opening 2a is to be made outward in the radial direction of the region where the opening 2a is to be made. During the formation of the thinner portion 2b, the resin spreads outward from the thinner portion 2b being formed, forming the annular projection 2d onto the inner surface at the contact portion 2c of the one parison P. The projection 2d improves the rigidity of the contact portion 2c. This ensures the rigidity of the contact portion 2c, even with a reduction in the thickness of the contact portion 2c for a cost saving purpose, thereby suppressing the contact portion 2c from being deformed by welding or the like, and also allowing for the manufacture of the hollow container with conventional facilities. The thinner portion 2b may have a circular shape or C-shape rather than an annular shape.

In the meanwhile, simultaneously with the transfer step, the step of fastening the built-in components 4, 4 is performed. The cylinders 15, 15 are actuated to move the built-in components 4, 4 toward the mold members 11,12 so that the base end portions of the built-in components 4, 4 are pressed to be embedded into the parisons P, P to predetermined depths. The built-in components 4, 4 are fastened and then made free of clamps of the clamping mechanisms 16,16, and as shown in FIG. 3C, the mold members 11,12 are opened. Subsequently, the mold members 11,12 are moved in a direction, for example, away from the paper surface of the figure to a place closer to the viewer of the figure where the mold members 11,12 are out of the center frame 13A, and then, as shown in FIG. 3D, the mold members 11,12 are closed together. Then, the parisons P, P are blown by blowing the air through the blow-pins (not shown). Thus, the parisons P, P are molded to form the container body 2A of the hollow container 1A.

Subsequently, the thinner portion 2b of the container body 2A is cut with a cutter or the like to form the opening 2a, into which the sub-component 3A is then inserted, followed by welding (hot-plate welding) the annular wall portion 3d of the sub-component 3A to the contact portion 2c. The sub-component 3A is thereby secured to the container body 2A, to obtain the hollow container 1A.

According to the hollow container 1A of the first embodiment of the present invention, the circumferential edge portion around the opening 2a is the thinner portion 2b of the thickness d1. This configuration suppresses the content of the hollow container 1A, for example, vaporized fuel, from permeating the outer resin layer 2y next to the barrier layer 2x.

In other words, according to the hollow container 1A, the thickness of the outer resin layer 2y next to the barrier layer 2x is reduced at the thinner portion 2, namely, the cross sectional area of the outer resin layer 2y next to the barrier layer 2x is reduced at the thinner portion 2. This enables the suppression of permeation of the content of the hollow container 1A, for example, vaporized fuel, through the outer resin layer 2y next to the barrier layer 2x.

More particularly, according to the hollow container 1A, the outer resin layer 2y is compressed to cause the barrier layer 2x to come closer to the boundary with the gaseous layer (atmosphere). This enables reduction of the absolute amount of the vaporized fuel that permeates into the outer resin layer 2y to the outside.

Further, according to the hollow container 1A, the thinner portion 2b is formed by compression and thus is easy to form.

Moreover, according to the hollow container 1A, the opening 2a is formed by cutting the annular thinner portion 2b, which facilitates the manufacture of the hollow container 1A, resulting in an improved productivity thereof.

In addition, according to the hollow container 1A, it is ensured that the contact portion 2c has a sufficient thickness. This configuration suppresses the contact portion being deformed by the welding and ensures reliability in welding without using any apparatus or the like for backing-up the contact portion 2c from inside the hollow container 1A.

Further, according to the hollow-container manufacturing apparatus 10A of the first embodiment of the present invention, it is possible to manufacture the hollow container 1A that enables suppression of the permeation of the content of the hollow container 1A through the resin layer.

Moreover, according to the hollow-container manufacturing apparatus 10A, the opening 2a may be formed by cutting the annular thinner portion 2b. This facilitates manufacture of the hollow container 1A, resulting in improved productivity thereof.

In addition, according to the hollow-container manufacturing apparatus 10A, the sufficient thickness d2 of the contact portion 2c is ensured, thereby suppressing the contact portion 2c from being deformed by the welding, and ensuring the reliability in assembly by the welding and in sealing without using any apparatus or the like for backing-up the contact portion 2c from inside the hollow container 1A.

<Second Embodiment>

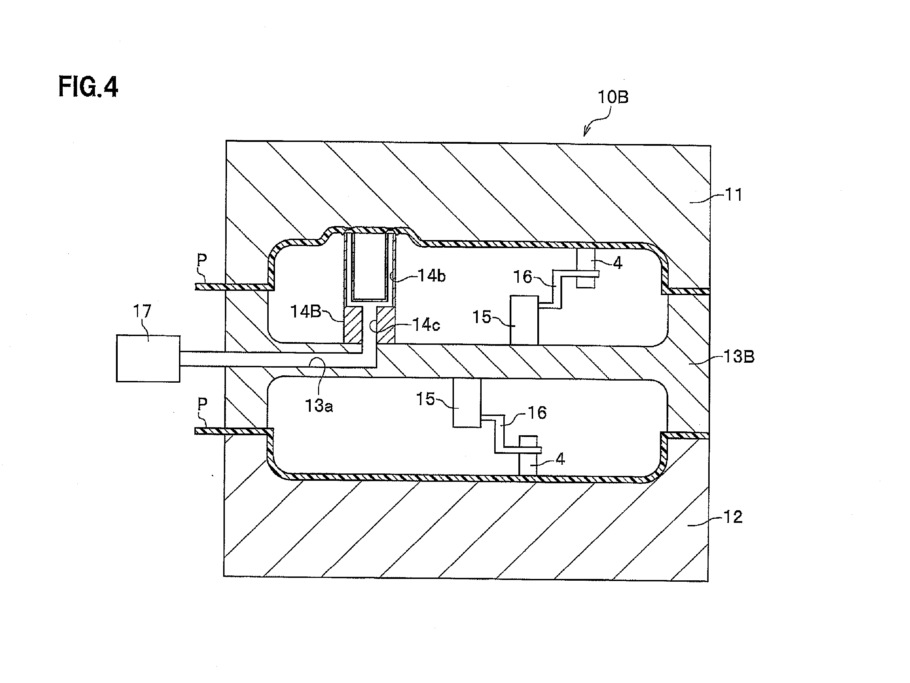

Now, description will be made of an apparatus for manufacturing the hollow container according to a second embodiment of the present invention, focusing on differences thereof from the hollow-container manufacturing apparatus 10A according to the first embodiment. As shown in FIG. 4, a hollow-container manufacturing apparatus 10B according to the second embodiment of the present invention includes, in addition to a center frame 13B and a jig 14B used in place of the center frame 13A and the jig 14A, a blow portion 17.

The center frame 13B is formed with a flow passage 13a. The jig 14B is formed with a blow passage 14b and a flow passage 14c. The blow passage 14b is annular or circular (here, annular) in cross section. The flow passage 14c is in communication with the blow passage 14b and the flow passage 13a of the center frame. The blow portion 17 supplies, to the flow passage 13a, a gas with a pressure higher than the blow pressure at blow molding (a gas with high flow speed). The supplied high-pressure gas is blown onto an area of an inner surface of the parison P through the flow passage 13a and the blow passage 14b. The portion of the parison P with that area is compressed by the blowing of the gas to form the annular thinner portion in the parison P.

The hollow-container manufacturing apparatus 10B of the second embodiment of the present invention has the same effects as does the hollow-container manufacturing apparatus 10A of the first embodiment.

<Third Embodiment>

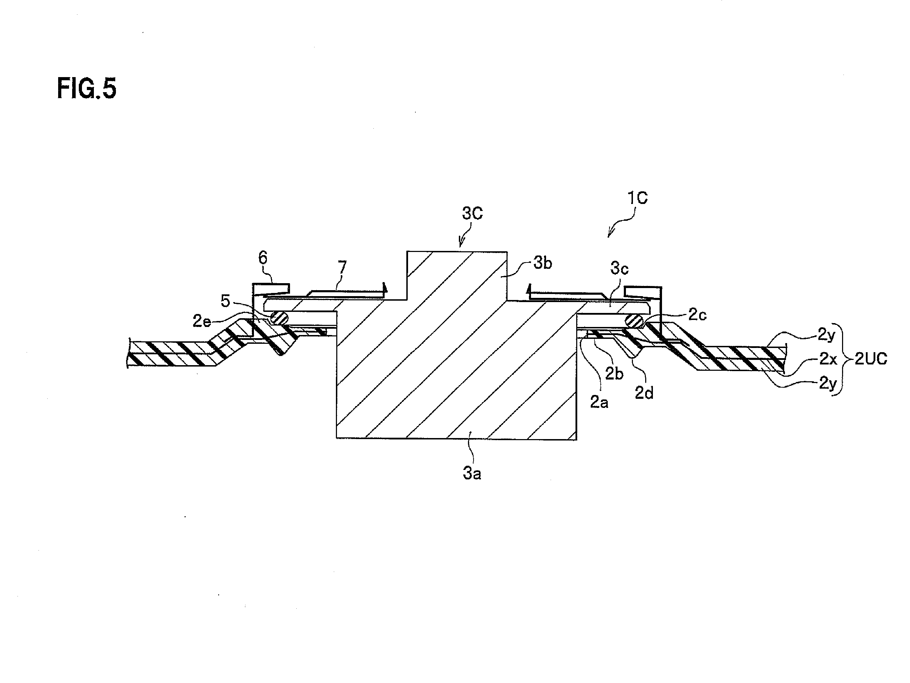

Now, description will be made of a hollow container according to the third embodiment of the present invention, focusing on differences thereof from the hollow container 1A according to the first embodiment. As shown in FIG. 5, a hollow container 1C according to the third embodiment of the present invention includes, in addition to a container body 2C and a sub-component 3C used in place of the container body 2A and the sub-component 3A, an O-ring 5, a cam-lock 6, and a retainer 7.

The container body 2C includes a container-body upper part 2UC in place of the container-body upper part 2UA. The container-body upper part 2UC has an annular projection 2e formed on an outer surface thereof. The annular projection 2e is larger in diameter than the O-ring 5 and serves as a stopper to prevent the O-ring 5 slipping out.

The sub-component 3C is a pump or the like and has no annular wall portion 3d. The O-ring 5 is placed between the outer surface of the contact portion 2c of the container body 2C and the inner surface of the flange portion 3c of the sub-component 3C. The cam-lock 6 has one end portion stuck and fixed in the outer resin layer 2y of the container body 2C. The cam-lock 6 has the other end portion engaging the retainer 7 provided at the outer surface of the flange portion 3c of the sub-component 3C. With this arrangement, the sub-component 3C is fixed to the container body 2C.

The hollow container 1C of the third embodiment of the present invention has the same effects as does the hollow container 1A even when another technique than welding is applied to secure the sub-component 3C to the container body 2C.

Description has been made of the embodiments of the present invention. The present invention, however, is not limited to those embodiments, and is modifiable properly in various forms within the scope of the present invention. For example, instead of using the two parisons P, P in the form of sheets to form each of the container bodies 2A and 2C, a cylindrical parison may be used. Further, the thinner portion 2b may be formed by machining the outer resin layer 2y or the like technique. Moreover, the hollow-container manufacturing apparatus may include a compressor that is movable inside a mold and presses a cylindrical parison P against the mold.

**Claims**

1. A hollow container (1A, 1C) comprising:

   a container body (2A, 2C) that is hollow and that has an opening (2a) formed in a wall of the container body (2A, 2C); and
   a sub-component (3A, 3C) that is inserted in the opening (2a) and that is in contact with an outer surface of the wall at a contact portion (2c) of the container body (2A, 2C) to seal the container body (2A), wherein
   the container body (2A, 2C) has a structure of multiple layers including an intermediate barrier layer (2x), and
   the wall of the container body (2A, 2C) is thinner at a circumferential edge portion around the opening (2a) as a thinner portion (2b) than at the contact portion (2c) where the sub-component (3A, 3C) is in contact with the outer surface of the wall.

2. The hollow container (1A, 1C) of Claim 1, wherein the thinner portion (2b) is formed by compression.

3. An apparatus (10A, 10B) for manufacturing a hollow container:

   a container body (2A, 2C) that is hollow and that has an opening (2a) formed in a wall of the container body (2A, 2C); and
   a sub-component (3A, 3C) that is inserted in the opening (2a) and that is in contact with an outer surface of the wall at a contact portion (2c) of the container body (2A, 2C) to seal the container body (2A, 2C),
   the apparatus (10A, 10B) manufacturing the container body (2A, 2C) by blow molding, wherein
   the apparatus (10A, 10B) comprises a compressor adapted to compress a portion of a parison (P) that encompasses a region where the opening (2a) is to be made in order to form a thinner portion (2b), the thinner portion (2b) being thinner than the contact portion (2c) where the sub-component (3A, 3C) is in contact with the outer surface of the wall, the parison (P) having a structure of multiple layers including an intermediate barrier layer (2x).

4. The apparatus (10A) of Claim 3, wherein the compressor is a presser adapted to press the parison (P) against a mold.

5. The apparatus (10B) of Claim 3, wherein the compressor blows a gas onto the parison (P) to form the thinner portion (2b).

FIG.1A

FIG.1B

FIG.1C

FIG.2A

FIG.2B

10A

11

P

X3

14A

16

4

15

13A

P

15

16

4

12

14a

11a

14A

EP 2 689 951 A1

8

FIG.3A

FIG.3C

FIG.3B

FIG.3D

FIG.4

FIG.5

Europäisches
Patentamt

European
Patent Office

Office européen
des brevets

**EUROPEAN SEARCH REPORT**

Application Number

EP 13 17 7591

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 314 603 A1 (EATON CORP [US]) 28 May 2003 (2003-05-28) | 1 | INV. B60K15/03 |
| Y | * paragraph [0015]; figure 5 * | 3 | |
| X | EP 1 203 685 A1 (NIFCO INC [JP]) 8 May 2002 (2002-05-08) | 1 | |
| Y | * column 69; figure 1 * | 3 | |
| Y | US 5 103 865 A (HYDE JAMES P [US]) 14 April 1992 (1992-04-14) * the whole document * | 3 | |
| Y | US 5 589 241 A (STILES ERNEST D [US] ET AL) 31 December 1996 (1996-12-31) * the whole document * | 3 | |

TECHNICAL FIELDS
SEARCHED      (IPC)

B60K

The present search report has been drawn up for all claims

| Place of search | Date of completion of the search | Examiner |
|---|---|---|
| Munich | 11 October 2013 | Eriksson, Jonas |

EPO FORM 1503 03.82 (P04C01)

**ANNEX TO THE EUROPEAN SEARCH REPORT**
**ON EUROPEAN PATENT APPLICATION NO.**                    EP 13 17 7591

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2013

| Patent document cited in search report | | Publication date | Patent family member(s) | | Publication date |
|---|---|---|---|---|---|
| EP 1314603 | A1 | 28-05-2003 | BR | 0205044 A | 16-09-2003 |
| | | | CA | 2411079 A1 | 21-05-2003 |
| | | | DE | 60201807 D1 | 09-12-2004 |
| | | | DE | 60201807 T2 | 27-10-2005 |
| | | | EP | 1314603 A1 | 28-05-2003 |
| | | | JP | 2003182390 A | 03-07-2003 |
| | | | KR | 20030041823 A | 27-05-2003 |
| | | | MX | PA02011452 A | 30-05-2003 |
| | | | TW | 567157 B | 21-12-2003 |
| | | | US | 2003094763 A1 | 22-05-2003 |
| EP 1203685 | A1 | 08-05-2002 | CN | 1356220 A | 03-07-2002 |
| | | | DE | 60117451 T2 | 16-11-2006 |
| | | | EP | 1203685 A1 | 08-05-2002 |
| | | | EP | 1291223 A2 | 12-03-2003 |
| | | | JP | 3914733 B2 | 16-05-2007 |
| | | | JP | 2002322955 A | 08-11-2002 |
| | | | KR | 20020034953 A | 09-05-2002 |
| | | | TW | 519526 B | 01-02-2003 |
| | | | US | 2002079694 A1 | 27-06-2002 |
| | | | US | 2004056482 A1 | 25-03-2004 |
| US 5103865 | A | 14-04-1992 | NONE | | |
| US 5589241 | A | 31-12-1996 | JP | H06219435 A | 09-08-1994 |
| | | | US | 5589241 A | 31-12-1996 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009534215 A
- JP 2008507651 A
- JP 2007092678 A